# FASCICULE DE BREVET EUROPEEN

(11) **EP 0 884 615 B1**
(45) Date de publication et mention de la délivrance du brevet: **15.08.2007**
(21) Numéro de dépôt: 98401324.3
(22) Date de dépôt: 03.06.1998
(51) Int. Cl.: G02B 6/293, G02B 3/00

(54) **Multiplexeur-démultiplexeur en longueur d'onde à fibres optiques.**
Faseroptischer Wellenlängen-Multiplexer-Demultiplexer
Fibre optic wavelength division multiplexer-demultiplexer

(30) Priorité: 09.06.1997 FR 9707128
(43) Date de publication de la demande: 16.12.1998
(73) Titulaire: YENISTA OPTICS SA, 22300 Lannion (FR)
(72) Inventeur: Laude, Jean-Pierre, 91960 St-Cyr-La-Rivière par Saclas (FR)
(74) Mandataire: Maillet, Alain

(56) Documents cités:
- EP-A- 0 242 574
- US-A- 4 622 662
- US-A- 4 702 569
- US-A- 4 736 360
- R.S LONGHURST: "Geometrical and physical optics" 1973 , LONGMAN , LONDON AND NEW YORK XP002056468 * page 402 - page 406 *
- M.BORN: "Optik" 1972 , SPRINGER , BERLIN HEIDELBERG NEW YORK XP002056469 * page 58 - page 60 *
- A.M.J.KOONEN: "A compact wavelength demultiplexer using both interference filters and diffraction grating" 7TH EUROPEAN CONFERENCE ON OPTICAL COMMUNICATION, 8 - 11 septembre 1981, pages 8.5-1-8.5-4, XP002056467 COPENHAGEN

## Description

La présente invention concerne un multiplexeur-démultiplexeur ou un routeur en longueur d'onde à fibres optiques, susceptible d'être utilisé comme composant dans les installations de télétransmissions par fibres optiques.

On connaît déjà de tels multiplexeurs-démultiplexeurs qui ont été décrits, puis progressivement perfectionnés, en particulier dans les brevets français FR-2.543.768, FR-2.519.148, FR-2.479.981, FR-2.496.260 et dans le brevet européen EP-0.196.963.

Ce dernier document concerne plus particulièrement un multiplexeur-démultiplexeur dans lequel les fibres d'entrée et de sortie sont positionnées au voisinage immédiat du foyer d'un miroir concave. Ainsi, les flux lumineux divergents reçus des fibres d'entrée sont transformés par le miroir concave en des faisceaux de lumière parallèles qui sont adressés sur un réseau de diffraction plan, qui dirige les faisceaux parallèles en retour vers le miroir concave et qui les focalise sur les extrémités des fibres de sortie.

On a cherché à réduire les aberrations et, en particulier, les aberrations sphériques d'un tel système et c'est ainsi qu'il a été proposé un tel multiplexeur-démultiplexeur comportant un élément porte-fibre, un élément portant le réseau de diffraction, un élément intermédiaire et un élément miroir sphérique. L'élément porte-fibre met les extrémités des fibres en contact avec l'élément portant le réseau de diffraction, l'élément intermédiaire qui est en contact avec le réseau de diffraction et a le même indice optique que l'élément qui le porte, se termine par une face sphérique qui est en contact avec le miroir.

Ce dispositif donne satisfaction, a permis et permet encore de nombreuses réalisations.

Toutefois, dans certaines applications particulières, on a pu regretter le poids relativement élevé de ce composant et son instabilité thermique produite par la variation de l'indice des différents éléments qui le composent, avec la température.

Le but de la présente invention est d'éviter ces inconvénients et donc de proposer un multiplexeur-démultiplexeur présentant les mêmes avantages que celui présenté plus haut, également corrigé des aberrations sphériques et chromatiques, mais ayant un poids allégé et présentant de plus une bonne stabilité thermique.

L'invention concerne donc un multiplexeur-démultiplexeur en longueur d'onde à fibres optiques comportant un système dispersif et un système réfléchissant ayant un foyer. Les extrémités de fibres d'entrée et de sortie sont à proximité dudit foyer.

En déterminant convenablement le nombre de fibres d'entrée, de fibres de sortie et le système dispersif, on peut également réaliser un routeur.

Selon l'invention, ce multiplexeur-démultiplexeur comporte un doublet optique corrigeant les aberrations sphériques et chromatiques de l'ensemble.

Ainsi, une grande partie de l'espace entre le système dispersif et le système réfléchissant est occupé par de l'air, par un gaz, ou est vide.

Le doublet est couplé à la fois au système dispersif et au système réfléchissant, de telle sorte qu'un faisceau émis par une fibre d'entrée traverse plusieurs fois le doublet. Le doublet permet ainsi d'agir successivement sur un tel faisceau au cours de ses passages répétés de manière à ce que le faisceau résultant de l'ensemble des passages par le doublet soit corrigé de ses aberrations géométriques et chromatiques.

Par rapport au dispositif antérieur qui ne comporte aucun élément entre le réseau de diffraction et le miroir, on obtient une bonne correction des aberrations sphériques et des aberrations chromatiques qui améliore significativement les performances du multiplexeur-démultiplexeur.

Par rapport à l'autre dispositif antérieur dans lequel un bloc optique intermédiaire relie le réseau de diffraction au miroir sphérique, le dispositif de l'invention permet d'obtenir un allégement significatif du multiplexeur-démultiplexeur.

De plus, le dispositif de l'invention permet d'obtenir un tel multiplexeur-démultiplexeur ayant une stabilité thermique significativement améliorée.

Selon différents modes de réalisation préférés présentant chacun leurs avantages particuliers :
- le doublet est en contact direct avec le système optique réfléchissant,
- le doublet fonctionne au voisinage des points de Young (encore connus sous le nom de points de Weierstrass) de sa face d'entrée,
- le système dispersif est un réseau,
- le système optique réfléchissant est un miroir concave,
- le doublet optique est un doublet comportant deux lentilles dont la deuxième lentille a une face extérieure convexe réfléchissante,
- la première lentille est réalisée dans un verre connu sous la référence PSK3 et le deuxième lentille est réalisée dans un verre connu sous la référence BaF52,
- la deuxième lentille a une épaisseur au centre égale à 7,66 mm et des courbures de sa face extérieure et d'une face intérieure opposée à cette face extérieure respectivement égales à 401,56 mm et à 748,90 mm, la première lentille a une courbure de sa face opposée à la deuxième lentille égale à 217,77 mm, et la face extérieure de la deuxième lentille et le système dispersif sont distants de 271,1mm,
- le système réfléchissant est plan,
- le système dispersif, d'une part, et le système réfléchissant et le doublet, d'autre part, sont assemblés à l'aide d'un matériau à faible coefficient de dilatation.

De plus, le dispositif est avantageusement utilisé en proche infrarouge, notamment à 1550 nm.

L'invention sera décrite plus en détail en référence aux Figures annexées dans lesquelles :
- la Figure 1 est un premier mode de réalisation de l'invention mettant en oeuvre un miroir sphérique ;
- la Figure 2 représente un deuxième mode de réalisation de l'invention ;
- la Figure 3 représente un troisième mode de réalisation ;
- la Figure 4 représente un quatrième mode de réalisation.

Les Figures représentent les composants optiques du dispositif de l'invention, indépendamment des structures mécaniques qui les portent et assurent leurs positionnements respectifs. Ces structures mécaniques peuvent revêtir de nombreuses formes et sont accessibles à l'homme du métier.

La présente description est faite par référence à l'utilisation de fibres optiques comme moyens d'entrée et de sortie du multiplexeur-démultiplexeur. Il est toutefois bien connu qu'il existe des composants émetteurs (diodes ou barrettes de diodes) et des composants récepteurs (CCD ou barrettes de CCD) dont les caractéristiques les rendent compatibles avec les fibres. Dans certaines applications, de tels composants peuvent remplacer les fibres en entrée ou en sortie du multiplexeur-démultiplexeur de l'invention et être placés à la place des extrémités desdites fibres. De tels composants sont donc équivalents aux fibres dans la définition de l'invention.

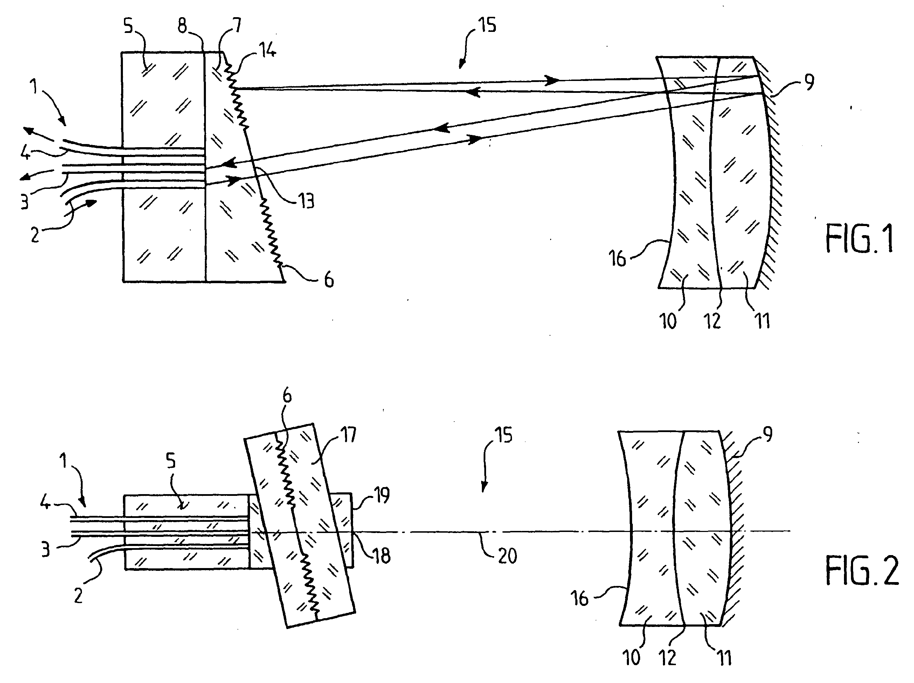

Ce multiplexeur comporte des fibres d'entrée et de sortie 1, il est représenté sur la Figure 1 avec une fibre d'entrée 2 et deux fibres de sortie 3, 4. Ces fibres sont solidaires d'un porte-fibre 5.

Un élément dispersif 6, ici un réseau, est porté par un support de réseau 7. Le porte-fibre 5 et le support de réseau 7 sont en contact par une interface 8.

Le miroir 9 réfléchit les rayonnements qu'il reçoit, il est solidaire d'un doublet, composé de deux éléments 10 et 11 associés par une interface 12. L'élément dispersif 6 comporte une zone centrale 13 transparente et une zone périphérique 14 diffractante.

Ainsi, le flux lumineux entrant produit par la fibre optique d'entrée 2, après réfraction par le dioptre 8, et sur la zone centrale 13 de l'élément diffractant 6 et, après réfraction par le doublet 10, 11, est réfléchi par le miroir 9 vers la zone périphérique 14 de l'élément diffractant 6. Il est diffracté par cet élément diffractant 6, cette diffraction dépendant de la longueur d'onde du flux considéré.

Les flux diffractés sont à nouveau réfléchis par le miroir 9 et, selon leur longueur d'onde, couplés aux fibres de sortie 3, 4.

Les indices et rayons de courbure du doublet 10, 11 sont déterminés de telle sorte qu'il assure la correction des aberrations géométriques et chromatiques de l'ensemble.

L'espace 15 entre l'élément diffractant 6 et le premier dioptre 16 du doublet réflecteur est occupé par de l'air ou par un gaz, ou le vide.

Les propriétés du doublet achromatique réflecteur sont de préférence les suivantes :

Le premier élément 11 portant le miroir réfléchissant 9 est réalisé dans un verre connu sous la référence BaF52, son épaisseur au centre est de 7,66 mm, la courbure de sa face portant le miroir est de 401,56 mm et la courbure de sa deuxième face est de 748,90 mm.

Le deuxième élément 10 de ce doublet est réalisé dans un verre connu sous la référence PSK3, la courbure de sa deuxième face est de 217,77 mm, la distance entre l'interface 18 et le miroir réfléchissant est de 271,6 mm. Le matériau de l'élément 7 portant le réseau est de la silice. La distance de la face 18 à l'extrémité du porte-filtre est de 21,49 mm.

Dans ce mode de réalisation selon la Figure 1, la distance moyenne entre les interfaces 13 et 8 est de 22 mm et la distance entre 13 et le miroir réfléchissant est de 271,1 mm.

L'assemblage entre les deux sous-ensembles, celui portant le réseau et celui portant le doublet réflecteur, est effectué à l'aide d'un tube de silice ou autre matériau à faible coefficient de dilatation sur lequel s'appuient les faces 6 et 16.

Les autres modes de réalisation seront décrits en référence aux Figures 2, 3 et 4 sur lesquelles les éléments inchangés par rapport au premier mode de réalisation décrit plus haut portent les mêmes références.

Dans le deuxième mode de réalisation représenté sur la Figure 2, la face gravée 6 du réseau est protégée par une lame plane à faces parallèles 17, au centre de laquelle est placé un petit prisme 18 en contact par sa face intérieure avec la lame 17 et dont la face extérieure 19 est approximativement perpendiculaire à l'axe optique 20.

Ainsi, la lumière issue des fibres n'est pas déviée, c'est-à-dire que chacune des fibres d'entrée émet un faisceau divergent centré sur l'axe 20 et par là, sur le doublet 10, 11.

On obtient ainsi une utilisation optimale et symétrique du multiplexeur-démultiplexeur.

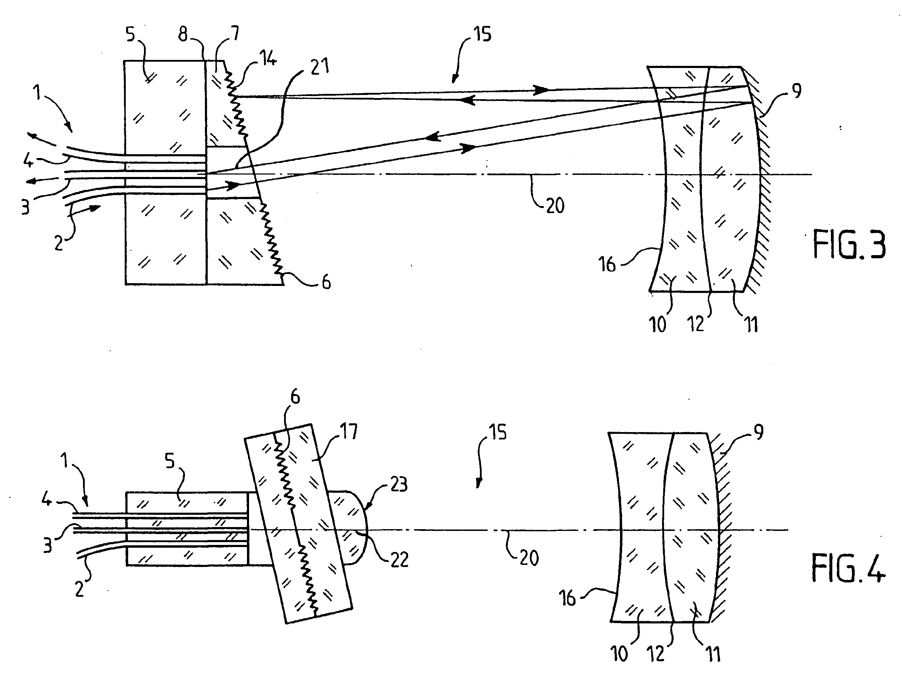

Selon le troisième mode de réalisation représenté à la Figure 3, l'élément dispersif 6 présente, en sa partie centrale, une ouverture 21 qui, elle aussi, évite la déviation des faisceaux émis par les fibres d'entrée et permettent donc une utilisation également optimale du multiplexeur-démultiplexeur. En effet, le dioptre 8, en contact avec le milieu 15 dans la zone centrale, au niveau de l'ouverture 21, est perpendiculaire à l'axe optique 20.

Dans la quatrième réalisation illustrée par la Figure 4, le réseau est protégé par une lame 17, au centre de laquelle se trouve un élément 22 dont l'une des faces est en contact avec la lame 17, et l'autre présente un dioptre sphérique 23 centré sur l'axe optique 20 du système.

La courbure de la surface sphérique 23 est telle que le plan des extrémités des fibres se trouve au voisinage de l'un des points de Young (également appelés points de Weierstrass) de ce dioptre 22.

De manière avantageuse, dans ces différents modes de réalisation, le plan des fibres d'entrée se trouve au voisinage de l'un des points de Young (ou de Weierstrass) du dioptre d'entrée 16 du doublet 10, 11.

Pour un dioptre sphérique de rayon de courbure R dont le sommet est S (point d'intersection de l'axe optique avec le dioptre), séparant des milieux d'indice respectivement n₂ et n₁, les points de Young (ou points de Weierstrass) sont les points situés sur l'axe optique à des distances respectivement R n₁/n₂ et R n₂/n₁ du sommet S. Il est connu que, pour de tels points, le dioptre considéré n'introduit pas d'aberrations, il est à la fois stigmatique et aplanétique.

Lorsque l'on indique que le plan des fibres est au voisinage de l'un des points de Young, cela signifie que dans le calcul de la combinaison optique faite de sorte à minimiser les opérations, les approximations successives seront faites en partant d'un point situé au voisinage de l'un des points de Young. L'aboutissement du calcul peut conduire à une position légèrement différente.

Ainsi, dans la réalisation indiquée plus haut, le verre référencé PSK3 ayant un indice n₁ = 1,53867 et l'aire ayant un indice 1 pour un rayon R = 217,117 mm, on obtient un point de Weierstrass à la distance d du sommet égale à 335,07 mm. En pratique, on obtient un système avec des aberrations minimisées pour les fibres positionnées à une distance optique égale à 286,482 mm.

## Revendications

1. Multiplexeur-démultiplexeur ou routeur en longueur d'onde à fibres optiques comportant un système dispersif réfléchissant (6), un système réfléchissant (9) ayant un foyer, des fibres d'entrée (2) et des fibres de sortie (3), les extrémités des fibres d'entrée (2) et de sortie (3) étant à proximité dudit foyer, le système dispersif réfléchissant étant positionné entre les fibres d'entrée et de sortie et de système réfléchissant de manière à réfléchir la lumière diffractée en direction du système réfléchissant **caractérisé en ce qu'**il comporte un doublet optique (10-12) d'un coté en contact direct avec le système optique réfléchissant (9) et de l'autre en contact avec un milieu aérien, gazeux ou vide par l'intermédiaire d'un dioptre d'entrée (16), et **en ce que** le plan des fibres d'entrée (2) et de sortie (3) se trouve à une distance de l'un des points de Young du dioptre d'entrée (16) qui est déterminée par approximations successives de manière telle que les aberrations géométriques et chromatiques de l'ensemble sont minimisés.

2. Multiplexeur-démultiplexeur ou routeur selon la revendication 1, **caractérisé en ce que** le système dispersif est un réseau (6).

3. Multiplexeur-démultiplexeur ou routeur selon l'une quelconque des revendications 1 à 2, **caractérisé en ce que** le système optique réfléchissant est un miroir concave (9).

4. Multiplexeur-démultiplexeur ou routeur selon l'une quelconque des revendications 1 à 3, **caractérisé en ce que** le doublet optique est un doublet comportant deux lentilles (10, 11) dont la deuxième lentille (11) a une face extérieure convexe réfléchissante (9).

5. Multiplexeur-démultiplexeur ou routeur selon la revendication 4, **caractérisé en ce que** la première lentille (10) est réalisée dans un verre connu sous la référence PSK3, et la deuxième lentille (11) est réalisée dans un verre connu sous la référence BaF52.

6. Multiplexeur-démultiplexeur ou routeur selon la revendication 5, **caractérisé en ce que** la deuxième lentille (11) a une épaisseur au centre égale à 7,66 mm et des courbures de sa face extérieure (9) et d'une face intérieure (12) opposée à ladite face extérieure (9) respectivement égales à 401,56 mm et à 748,90 mm, **en ce que** la première lentille (10) a une courbure de sa face (16) opposée à la deuxième lentille (11) égale à 217,77 mm, et **en ce que** la face extérieure (9) de la deuxième lentille (11) et le système dispersif (6) sont distants de 271,1 mm.

## Claims

1. Optical fiber wavelength multiplexer-demultiplexer or router comprising a reflecting dispersing system (6), a reflecting system (9) having a focus, input fibers (2) and output fibers (3), the extremities of the input fibers (2) and output fibers (3) being located in the vicinity of said focus, the reflecting dispersing system (6) being located between the input fibers (2) and output fibers (3) and the reflecting system (9) in such way that it reflects the diffracted light in the direction of the reflecting system (9), **characterised in that** it comprises an optical doublet (10-12) on one side in direct contact with the reflecting optical system (9) and on the other side in contact with air, a gas or a vacuum through an input diopter (16), and **in that** the plane of the input fibers (2) and output fibers (3)is located at a distance of one of the Young points of the input diopter (16) which is determined by successive approximations so as the geometrical and chromatic aberrations of the whole system are minimised.

2. Multiplexer-demultiplexer or router according to claim 1, wherein the dispersing system is a grating (6).

3. Multiplexer-demultiplexer or router according to any one of claims 1 to 2, wherein the reflecting optical system is a concave mirror (9).

4. Multiplexer-demultiplexer or router according to any one of claims 1 to 3, wherein the optical doublet is a doublet comprising two lenses (10, 11), the second of which has a reflecting convex external face (9).

5. Multiplexer-demultiplexer or router according to claim 4, wherein the first lens (10) is made of a glass known under the reference PSK3, and the second lens (11) is made of a glass known under the reference BaF52.

6. Multiplexer-demultiplexer or router according to claim 5, wherein the second lens (11) has a center thickness equal to 7,66 mm and radii of curvature of its external face (9) and of an internal face (12) opposed to said external face (9) which are respectively equal to 401,56 mm and to 748,90 mm, in that the first lens (10) has a radii of curvature of its face (16) opposed to the second lens (11) which is equal to 217,77 mm, and in that the external face (9) of the second lens (11) and the dispersing system (6) are 271,1 mm apart.

## Patentansprüche

1. Faseroptischer Wellenlängen-Multiplexer/Demultiplexer oder Router mit einem reflektierenden streuenden System (6), einem einen Brennpunkt umfassenden reflektierenden streuenden System (9), Eingangsfasern (2) und Ausgangsfasern (3), wobei die Enden der Eingangsfasern (2) und Ausgangsfasern (3) dem Brennpunkt benachbart angeordnet sind, das reflektierende streuende System zwischen den Ein- und Ausgangsfasern angeordnet ist und das reflektierende System so angeordnet ist, dass das gebeugte Licht in Richtung des reflektierenden Systems reflektiert wird, **dadurch gekennzeichnet, dass** er einen optischen Dipol (10-12) aufweist, der einerseits mit dem reflektierenden optischen System (9) in direktem Kontakt und andererseits über einen Eingangsdiopter (16) mit einer Luft-, Gas- oder Vakuumumgebung in Kontakt steht, und dass sich die Ebene der Eingangsfasern (2) und Ausgangsfasern (3) in einem Abstand von einem der Young-Punkte des Eingangsdiopters (16) befindet, der durch schrittweise Annäherungen bestimmt wird, sodass die geometrischen und chromatischen Bildfehler des Ganzen auf ein Mindestmaß reduziert werden.

2. Multiplexer/Demultiplexer oder Router nach Anspruch 1, **dadurch gekennzeichnet, dass** das streuende System ein Gitter (6) ist.

3. Multiplexer/Demultiplexer oder Router nach einem der Ansprüche 1 bis 2, **dadurch gekennzeichnet, dass** das reflektierende optische System ein Konkavspiegel (9) ist.

4. Multiplexer/Demultiplexer oder Router nach einem der Ansprüche 1 bis 3, **dadurch gekennzeichnet, dass** der optische Dipol ein Dipol mit zwei Linsen (10, 11) ist, dessen zweite Linse (11) eine reflektierende konvexe Außenfläche (9) aufweist.

5. Multiplexer/Demultiplexer oder Router nach Anspruch 4, **dadurch gekennzeichnet, dass** die erste Linse (10) aus einem unter der Bezeichnung PSK3 bekannten Glas und die zweite Linse (11) aus einem unter der Bezeichnung BaF52 bekannten Glas hergestellt ist.

6. Multiplexer/Demultiplexer oder Router nach Anspruch 5, **dadurch gekennzeichnet, dass** die zweite Linse (11) eine Mittendicke von 7,66 mm und Krümmungen ihrer Außenseite (9) und einer der Außenseite (9) abgewandten Innenseite (12) von jeweils 401,56 mm und 748,90 mm aufweist, dass die erste Linse (10) auf ihrer der zweiten Linse (11) abgewandten Seite (16) eine Krümmung von 217,77 mm aufweist und dass der Abstand zwischen der Außenseite (9) der zweiten Linse (11) und dem streuenden System (6) 271,1 mm beträgt.
